# EUROPÄISCHE PATENTSCHRIFT

(11) **EP 3 827 723 B1**
(45) Veröffentlichungstag und Bekanntmachung des Hinweises auf die Patenterteilung: **12.03.2025**
(21) Anmeldenummer: 20199534.7
(22) Anmeldetag: 01.10.2020
(51) Int. Cl.: A47K 13/12, A47K 13/26

(54) **GELENKANORDNUNG ZUR SCHWENKBAREN LAGERUNG EINES DECKELS, EINES SITZES ODER EINER SITZ-DECKEL-GARNITUR AN EINEM KERAMISCHEN SANITÄRGEGENSTAND**
ARTICULATED ASSEMBLY FOR A PIVOTABLE MOUNTING OF A COVER, A SEAT OR A SEAT COVER FITTING ON A CERAMIC SANITARY BOWL
AGENCEMENT ARTICULAIRE DESTINÉ À L' ASSEMBLAGE PIVOTANT D'UN COUVERCLE, D'UN SIÈGE OU D'UNE GARNITURE DE COUVERCLE DE SIÈGE SUR UNE CUVETTE SANITAIRE EN CÉRAMIQUE

(30) Priorität: 27.11.2019 DE 102019132130
(43) Veröffentlichungstag der Anmeldung: 02.06.2021
(73) Patentinhaber: Duravit Aktiengesellschaft, 78132 Hornberg (DE)
(72) Erfinder: STAMMEL, Thomas, 78132 Hornberg (DE); DEMMEL, Rüdiger, 83112 Frasdorf (DE)
(74) Vertreter: Lindner Blaumeier Patent- und Rechtsanwälte

(56) Entgegenhaltungen:
- DE-A1- 102014 105 342
- DE-A1- 102016 125 047
- DE-U1- 202018 104 601
- FR-A1- 2 666 215
- HOCHHÄUSER: "Softclose-Scharnier", 29 September 2011 (2011-09-29), XP093030496, Retrieved from the Internet <URL:-> [retrieved on 20230309]
- GRUBER: "SoftClose Scharnier C3702Q", 6 February 2014 (2014-02-06), XP093030500, Retrieved from the Internet <URL:->
- PREISSINGER TOBIAS: "Email Softclose-Scharniere und Dämpferelemente", 24 October 2017 (2017-10-24), XP093030501, Retrieved from the Internet <URL:->
- HAMBERGER SANITARY: "Ersatzset Duravit TD87 rot/WS", 26 June 2020 (2020-06-26), XP093030502, Retrieved from the Internet <URL:->
- HAMBERGER SANITARY: "Ersatzset Duravit TD87 gelb/WS", 3 September 2020 (2020-09-03), XP093030504, Retrieved from the Internet <URL:-> [retrieved on 20230309]
- PETRA FALK: "Lieferschein Softclose Scharnier", 4 May 2017 (2017-05-04), XP093030505, Retrieved from the Internet <URL:->
- NEES: "Softclose Scharnier C0102G", 8 July 2015 (2015-07-08), XP093030508, Retrieved from the Internet <URL:->
- RIESINGER FLORIAN: "Lieferung SoftClose Scharnier C0102G", 18 November 2011 (2011-11-18), XP093030509, Retrieved from the Internet <URL:->

## Beschreibung

Die Erfindung betrifft eine Gelenkanordnung zur schwenkbaren Lagerung eines Deckels, eines Sitzes oder einer Sitz-Deckel-Garnitur um eine Schwenkachse an einem keramischen Sanitärgegenstand.

Eine solche Gelenkanordnung zur Lagerung einer Sitz-Deckel-Garnitur an einem WC ist beispielsweise aus EP 1 199 020 A2 oder DE 10 2014 105342 A1 bekannt. Eine solche Gelenkanordnung respektive ein dort beschriebenes WC-Sitzgelenk umfasst einerseits einen an dem Sanitärgegenstand zu befestigendes, längliches Befestigungselement in Form eines Dorns, eine Dämpfungseinrichtung sowie einen Adapter, der der Verbindung der Dämpfungseinrichtung mit dem Dorn dient. Dieser Adapter weist eine Sacklochbohrung auf, mit der er von oben auf den Dorn aufgesetzt wird, so dass er sich aufgrund der Sacklochausgestaltung axial auf dem Dorn abstützt.

Die Dämpfungseinrichtung und in Verlängerung derselben der Adapter bildet eine Schwenkachse, wobei, nachdem dort eine Sitz-Deckel-Garnitur gelagert wird, zwei solcher Gelenkanordnungen respektive WC-Sitzgelenke vorgesehen sind. Die eine Dämpfungseinrichtung ist formschlüssig mit dem Deckel, die andere mit dem Sitz gekoppelt, wozu Koppelabschnitte der Dämpfungseinrichtungen in entsprechende sitz- respektive deckelseitige Aufnahmen formschlüssig eingreifen. Dies ermöglicht es, sowohl die Schwenkbewegung des Deckels als auch des Sitzes separat über die jeweils zugeordnete respektive gekoppelte Dämpfungseinrichtung zu dämpfen.

Da wie beschrieben der aus EP 1 199 020 A2 bekannte Adapter eine Sacklochbohrung aufweist, kann der Dorn nur von unten zugeführt bzw. der Adapter nur von oben aufgesetzt werden. Das System bietet daher nur diese eine Befestigungsmöglichkeit.

Der Erfindung liegt damit das Problem zugrunde, eine demgegenüber verbesserte Gelenkanordnung anzugeben.

Zur Lösung dieses Problems ist erfindungsgemäß eine Gelenkanordnung zur schwenkbaren Lagerung eines Deckels, eines Sitzes oder einer Sitz-Deckel-Garnitur um eine Schwenkachse an einem keramischen Sanitärgegenstand nach Patentanspruch 1 vorgesehen.

Die erfindungsgemäße Deckelanordnung weist grundsätzlich ein längliches Befestigungselement auf, das in geeigneter Weise am Sanitärgegenstand anzuordnen respektive festzulegen ist und das die Schnittstelle zur Aufnahme des Dämpferelements darstellt. Des Weiteren umfasst die erfindungsgemäße Gelenkanordnung ein Lagerelement mit einer Durchgangsbohrung. Dieses Lagerelement wird von dem länglichen Befestigungselement durchgriffen, das heißt, dass es eine Durchgangsbohrung aufweist und demzufolge auf das Befestigungselement aufgeschoben werden kann. In der Montagestellung ist das Lagerelement zur Sanitärkeramik hin abgestützt bzw. liegt an deren Oberseite auf. Dieses Lagerelement dient der Aufnahme und Abstützung des Verbindungselements, das entweder einstückiger Teil des Dämpferelements ist, oder an diesem angeordnet ist. Das Verbindungselement ist in axialer Verlängerung des Dämpferelements vorgesehen, beide bilden auch hier die Schwenkachse. Jedoch weist das Verbindungselement eine Durchgangsbohrung auf, in die das Befestigungselement eingreift oder durch die es durchgreift. In der Montagestellung ruht das Verbindungselement auf dem Lagerelement, wobei beide formschlüssig miteinander gekoppelt ist, das heißt, dass das Lagerelement eine erste Formschlussgeometrie und das Verbindungselement eine zweite Formschlussgeometrie aufweist, die beide formkompatibel sind, so dass sich ein formschlüssiger Eingriff ergibt.

Die erfindungsgemäße Gelenkanordnung weist eine Reihe von Vorteilen auf. Zunächst bietet die Ausbildung einer Durchgangsbohrung, also einer Bohrung mit konstanten Durchmesser, die das Verbindungselement durchsetzt, die Möglichkeit, die Gelenkanordnung mit unterschiedlichen Befestigungsmöglichkeiten relativ zum Sanitärgegenstand auszubilden, wobei sich diese Befestigungsmöglichkeiten in der Art und der Weise, wie sie zu lösen sind, unterscheiden. Dies erlaubt es, worauf nachfolgend noch eingegangen wird, eine einfache Lösungsmöglichkeit vorzusehen, die ein einfaches Abziehen erlaubt, aber auch komplexere Lösungsmöglichkeiten, bei denen ein Werkzeug benötigt wird, bis hin zu Lösungsmöglichkeiten, die nur aufwändig durch Lösen von Befestigungsmitteln unterhalb der Keramik gelöst werden können. Dies deshalb, da die Durchgangsbohrung insbesondere die Verwendung verschiedenartiger Befestigungselemente erlaubt, aber auch die Anbringung unterschiedlicher Befestigungsmittel zum Fixieren des Verbindungselements am Befestigungselement.

Da das Lagerelement um das quasi eine Drehachse bildende Befestigungselement drehbar ist, wie aufgrund des Eingriffs des Befestigungselements in die Durchgangsbohrung des Verbindungselements auch das Verbindungselement und damit das Dämpferelement um das Befestigungselement verdreht werden können, ist es weiterhin aufgrund des formschlüssigen Eingriffs möglich, das Dämpferelement gemeinsam mit dem Lagerelement geringfügig zu verdrehen und auszurichten, das heißt, dass die Ausrichtung des Lagerelements der des Dämpferelements folgt. Dies ist aufgrund des formschlüssigen Eingriffs möglich, da eine geringe Verdrehung des Dämpferelements zwangsläufig in einer Mitnahme des Lagerelements resultiert. Aufgrund dieses formschlüssigen Eingriffs ist auch hier sichergestellt, dass der Bereich nicht verschmutzen kann respektive gut reinigbar ist, da resultierend aus dem Formschluss keine Spalten oder ähnliches in nennenswerten Umfang verbleiben.

Und schließlich ist das längliche Befestigungselement zumindest über einen Teil seiner Länge von dem Lagerelement umgriffen und demzufolge abgedeckt. Da das Lagerelement keramikseitig abgestützt ist respektive dort aufliegt, und oberseitig auf dem Lagerelement wiederum das Verbindungselement aufliegt, kann demzufolge das Befestigungselement nicht verschmutzen, da es quasi gehäuseartig eingeschlossen ist. Das Lagerelement kann so ausgeführt werden, dass es wesentlich besser zugänglich ist und demzufolge eine Reinigung einfacher möglich ist.

Ein erfindungsrelevantes Merkmal ist die formschlüssige Kopplung von Lagerelement und Verbindungselement über den Eingriff der Formschlussgeometrien. Auf einfache Weise kann eine solche formschlüssige Kopplung dadurch realisiert werden, dass das Verbindungselement zumindest im am Lagerelement anliegenden Abschnitt eine rundliche Außenform aufweist und der Halteabschnitt formkompatibel rundlich ausgeführt ist. Rundliche Formen lassen sich auf sehr einfache Weise herstellen, insbesondere wenn es sich bei den zu koppelnden Bauteilen um Kunststoffbauteile handelt. Bevorzugt ist die jeweilige Formschlussgeometrie quasi als Teilzylinderform ausgeführt.

Das Lagerelement selbst dient wie beschrieben einerseits der Einhausung oder Kapselung des Befestigungselements, andererseits aber auch als Abstützteil für das Verbindungselement und damit die Dämpfereinrichtung. Gemäß einer ersten Erfindungsalternative kann dabei das Lagerelement nach Art einer Kappe mit einem breiten Fuß und einem sich daran anschließenden, den Halteabschnitt aufweisenden schmäleren Abschnitt ausgeführt sein. Bei dieser Ausgestaltung dient der sich erweiternde Fuß als zusätzliches Abdeckmittel, um beispielsweise eine Lagerscheibe, auf der, wie nachfolgend noch beschrieben wird, das Befestigungselement abgestützt sein kann, zu übergreifen, also ebenfalls abzudecken. Am sich verschmälernden anderen Ende des Lagerelements ist dann der entsprechende Halteabschnitt vorgesehen, an respektive in dem das Verbindungselement aufgenommen ist. Alternativ ist es auch denkbar, das Lagerelement als einfaches hülsenartiges Bauteil aufzuführen, das an einem Ende den Halteabschnitt aufweist. Diese Ausgestaltung kann dann gewählt werden, wenn auf eine Abdeckung einer etwaigen Lagerscheibe kein Wert gelegt wird, oder dies aus technischen Gründen, beispielsweise bei einer Exzenterlagerung, die nachfolgend noch beschrieben wird, nicht möglich ist.

Grundsätzlich dient das Lagerelement, insbesondere wenn es den verbreiternden Fuß aufweist, auch als Designelement, da insbesondere die Fußgeometrie beliebig gewählt werden kann. Der Fuß kann beispielsweise rund sein, also beispielsweise der Form einer übergriffenen Lagerscheibe entsprechend ausgeführt sein, er kann aber auch viereckig oder mehreckig sein, je nach Belieben. Auch besteht die Möglichkeit, es durch entsprechende Farbgestaltung auffällig auszuführen, oder beispielsweise wie auch den Sanitärgegenstand in weiß, so dass es eher versteckt ist etc.

Wie bezüglich der Ausgestaltung des Lagerelements verschiedene Alternativen gegeben sind, ist dies auch bei dem Befestigungselement der Fall. Gemäß der Erfindung ist das längliche Befestigungselement ein Dorn. Dieser Dorn ragt in der Montagestellung im Wesentlichen vertikal von der Oberseite des Sanitärgegenstands ab, so dass das Dämpferelement respektive Verbindungselement auf einfache Weise von oben mit der Durchgangsbohrung aufgeschoben werden kann. Dieser Dorn kann, worauf nachfolgend noch eingegangen werden wird, entweder direkt selbst am Sanitärgegenstand festgelegt werden, wozu er mit einem entsprechenden, ein Gewinde aufweisenden Abschnitt durch die keramikseitige Bohrung greift und beispielsweise von unten mit einer Mutter gekontert wird oder ein an dem Gewindeabschnitt angeordnetes Kippwiderlager an der Unterseite des Sanitärgegenstandes aufgelagert wird und der Dorn relativ zu diesem verschraubt wird etc. Alternativ kann der Dorn auch quasi exzentrisch zur eigentlichen Bohrung des Sanitärgegenstandes angeordnet sein, in dem er an einer Haltescheibe angeordnet ist, die ihrerseits über eine Befestigungsschraube am Sanitärgegenstand fixiert ist. Hier ist also eine versetze Anordnung relativ zur keramikseitigen Bohrung vorgesehen, was in Verbindung mit der üblichen Drehlagerung eine Exzenterlagerung erwirkt, die eine Verdrehung und damit Ausrichtung um zwei Achsen ermöglicht. Hierauf wird nachfolgend noch eingegangen. Das heißt, dass also entweder der Dorn zumindest abschnittsweise mit einem Gewinde zur Aufnahme eines ihn an der Sanitärkeramik fixierenden Widerlagerelements, insbesondere einer Mutter versehen ist, oder dass der Dorn an einer an der Sanitärkeramik anliegenden Haltescheibe, die über eine versetzt zum Dorn angeordnete Befestigungsschraube an dem Sanitärgegenstand zu fixieren ist, angeordnet ist.

Um den Dorn fest mit dem Sanitärgegenstand zu verbinden, ist es zweckmäßig, wenn der Dorn einen Kragen aufweist, über den der das Gewinde aufweisende Dorn in der Montagestellung an einer auf der Sanitärkeramik aufliegenden Lagerscheibe oder der an der Haltescheibe angeordnete Dorn an der Haltescheibe aufgelagert ist. Dieser Kragen dient der axialen Abstützung des Dorns entweder an einer separaten Lagerscheibe oder der ihn tragenden Haltescheibe im Falle der exzentrischen Lagerung. An der exzentrischen Haltescheibe kann der Dorn beispielsweise mittels einer in eine Innengewindebohrung eingeschraubten Madenschraube fixiert sein.

Bevorzugt weist der Kragen eine Haltegeometrie zum Angreifen mit einem Werkzeug auf. Beispielsweise ist der Kragen vier- oder sechseckig ausgeführt, so dass mit einem Gabel- oder Maulschlüssel hieran angegriffen und der Dorn verschraubt werden kann.

Wie beschrieben ist im Rahmen einer sehr einfachen Befestigungsmöglichkeit ein einfaches Aufstecken und damit auch ein einfaches Abziehen des Verbindungselements, damit aber auch des Sitzes, Deckels oder der Garnitur vom Befestigungselement respektive dem Dorn vorgesehen. Um auch bei dieser einfachen Befestigungsanordnung eine gewisse axiale Fixierung des Verbindungselements am Dorn zu realisieren, ist gemäß einer zweckmäßigen Weiterbildung am Dorn in dem Bereich, der in der Montagestellung in die am Verbindungselement vorgesehene Durchgangsbohrung eingreift, wenigstens ein Klemmring zur Klemmung des Verbindungselements vorgesehen. Dieser Klemmring, beispielsweise ein Metallring, verspreizt respektive verklemmt sich in der Montagestellung gegen die Innenwandung der Durchgangsbohrung, worüber eine gewisse axiale Arretierung gegeben ist, die jedoch bei hinreichend kräftigem Ziehen in Axialrichtung gelöst werden kann.

Für eine einfache Montage beim Aufschieben des Verbindungselements auf den Dorn ist bevorzugt am Verbindungselement an der beim Aufschieben auf den Dorn vorlaufenden Seite im Bereich der Durchgangsbohrung eine Fase vorgesehen, die auf den Klemmring, diesen zusammendrückend, läuft. Beim Aufschieben läuft also diese Fase gegen den Klemmring, was dazu führt, dass dieser geringfügig zusammengedrückt wird und in die Durchgangsbohrung eingeschoben werden kann, wo er sich, da zusammengedrückt, radial verspreizt.

Ferner ist es denkbar, am Dorn wenigstens einen die Aufschiebebewegung dämpfenden Dämpfungsring anzuordnen. Dieser Dämpfungsring, ein einfacher Gummiring, dient quasi als geringfügig dämpfender Anschlag, wenn das Verbindungselement in die Endstellung einläuft, in der es formschlüssig am Halteabschnitt des Lagerelements aufgenommen ist.

Wie ausgeführt ist die vorstehend beschriebene erste Erfindungsalternative eine reine Aufstecklösung, die eine Fixierung, aber auch ein Lösen ohne einen Werkzeugeinsatz erlaubt. Eine zweite Befestigungsvariante, bei der zum Montieren, aber auch zum Lösen ein Werkzeug benötigt wird, sieht eine am Dorn ausgebildete Gewindebohrung vor, wobei das Verbindungselement mittels einer in die Gewindebohrung einzuschraubenden Befestigungsschraube zu fixieren ist. Hier wird also unter Verwendung einer Befestigungsschraube das Verbindungselement fest am Dorn positioniert, wozu ein entsprechendes Werkzeug erforderlich ist. Die Montage, aber insbesondere das Abnehmen ist komplizierter, da eben ein Werkzeugeinsatz erforderlich ist, was insbesondere ein ungewolltes, unbefugtes Lösen verhindert.

Dabei kann die Gewindebohrung als Axialbohrung ausgeführt sein. Diese Axialbohrung ist in der in der Durchgangsbohrung freiliegenden Stirnfläche des Dorns eingebracht, so dass die Befestigungsschraube nach Aufschieben des Verbindungselements dann von oben in die Durchgangsbohrung eingeführt und in den Dorn axial eingeschraubt wird. Alternativ ist aber auch eine Radialbohrung möglich, die über eine am Verbindungselement vorgesehene Radialbohrung, die in die Durchgangsbohrung führt, von der Seite her zugänglich ist. Auch hier kann auf einfache Weise die Befestigungsschraube, dann von der Seite, eingeschraubt werden.

Bevorzugt ist, egal ob nun eine Axialbohrung oder eine Radialbohrung vorgesehen ist, am Verbindungselement eine Eintiefung oder Ausnehmung zur Aufnahme eines Kopfes der Befestigungsschraube ausgebildet, so dass die Befestigungsschraube möglichst weit versenkt werden kann und wenn möglich seitlich nicht absteht.

Bei den vorstehend beschriebenen Ausgestaltungen kommt als längliches Befestigungselement stets ein Dorn zum Einsatz, entweder als unmittelbar an der Sanitärkeramik befestigter Dorn, oder als exzentrisch zu der eigentlichen Befestigungsschraube angeordneter Dorn. Beide Ausgestaltungen lassen ein Lösen durch Abziehen des Sitzes, Deckels oder der Garnitur nach oben zu, entweder ohne oder mit Lösen einer Befestigungsschraube. Die erfindungsgemäße Gelenkanordnung lässt aber auch eine Ausgestaltung zu, bei der ein derartiges Abziehen nicht möglich ist, sondern eine sehr umständlich zu lösende Anordnung vorgesehen ist. Bei dieser Erfindungsausgestaltung ist das längliche Befestigungselement eine Gewindestange mit einem am Verbindungselement aufzulagernden Kopf. Hier wird die Gewindestange zunächst von oben durch die Gewindebohrung des Verbindungselements und des Lagerelements gesteckt und anschließend mit ihrem unteren Ende durch die Bohrung im Sanitärgegenstand gesteckt, wonach sie von unterhalb des Sanitärgegenstands respektive der Befestigungsebene mit einer Mutter oder dergleichen festgeschraubt wird. Der Kopf dieser Gewindestange ruht auf dem Verbindungselement, das seinerseits wieder über das Lagerelement zum Sanitärgegenstand hin abgestützt ist. Ein Lösen ist nur möglich, wenn man mit einem Werkzeug quasi unter die Befestigungsebene gelangt, um die Gewindestangenmutter zu lösen, was sehr aufwändig ist und, wenn der Sanitärgegenstand beispielsweise wandseitig verschraubt ist, mitunter aufgrund einer versteckten Anordnung dieser Gewindestangenmutter erst nach Demontage des Sanitärgegenstandes von der Wand möglich ist.

Das heißt, dass das erfindungsgemäße System zwei unterschiedliche grundsätzliche Befestigungsarten, nämlich eine einfache Aufsteckvariante, die ein Abziehen nach oben ermöglicht, sowie eine Durchsteckvariante, die nur sehr aufwändig zu lösen ist und die auch als Diebstahlsicherung angesehen werden kann, ermöglicht. Dies resultiert aus der Ausbildung einer entsprechenden Durchgangsbohrung am Verbindungselement, die einerseits das Einführen des Dorns von unten, andererseits das Einführen der Gewindestange von oben erlaubt.

Bei der Ausgestaltung mit Gewindestange ist zweckmäßigerweise am Verbindungselement eine Eintiefung oder Ausnehmung zur Aufnahme des Kopfes ausgebildet, das heißt, dass der Kopf in gewisser Weise etwas versenkt zur Außenkontur, insbesondere zur Kontur des Abschnitts, der am Halteabschnitts formschlüssig aufgenommen ist, positioniert wird. Dabei ist bevorzugt der Kopf mit einer rundlichen Oberseite ausgeführt, was eine Anpassung an die bevorzugt zylindrische Grundform des Verbindungselements erlaubt und der Kopf quasi bündig mit der zylindrischen Grundform des Verbindungselements verläuft.

Weiterhin ist es denkbar, eine auf das Verbindungselement aufschiebbare Abdeckkappe vorzusehen. Diese Abdeckkappe, die quasi hülsenartig ist und eine Innenform aufweist, die der Außenform des Verbindungselements entspricht, also bevorzugt hohlzylindrisch ist, wird auf einfache Weise von der Seite auf das Verbindungselement aufgeschoben. Die Abdeckhaube weist einen Schlitz auf, so dass sie das Lagerelement seitlich umgreift. Diese Ausgestaltung ermöglicht eine optisch ansprechende Kapselung des eigentlichen Verbindungsbereichs, so dass weder die Durchgangsbohrung und damit die Dornstirnseite, gegebenenfalls mit eingeschraubter Befestigungsschraube, freiliegen respektive zu sehen sind, oder der Kopf der Gewindestange. Bevorzugt ist die Ausgestaltung so gewählt, dass der Außendurchmesser der Abdeckkappe dem Außendurchmesser des zylindrischen Dämpferelements entspricht, so dass nach Aufschieben der Abdeckkappe ein durchgehender zylindrischer Körper gegeben ist.

Das Verbindungselement selbst, wie auch das Lagerelement und gegebenenfalls die Lagerscheibe, die Haltescheibe und die Abdeckscheibe können aus Kunststoff sein. Die Kunststoffausgestaltung insbesondere in Bezug auf das Verbindungselement und damit aber auch das Dämpfungselement, sofern beide einstückig ausgeführt sind, wie auch des Lagerelements aus Kunststoff lässt eine einfache Herstellung der entsprechenden Bauteile zu, und bietet darüber hinaus eine einfache Form- und Farbvariationsmöglichkeit. Auch die Lagerscheibe, die Haltescheibe und die Abdeckkappe können aus Kunststoff sein, sie können aber auch wie das Befestigungselement aus Metall ausgeführt werden. Die Lagerscheibe selbst, die bevorzugt aus Metall ist, kann auch leicht bombiert sein, um eine dauerhafte Befestigung bzw. axiale Verspannung resultierend aus der Materialspannung der in der Montagestellung verspannten Scheibe zu realisieren.

Neben der Gelenkanordnung selbst betrifft die Erfindung ferner eine Sanitäreinrichtung, umfassend einen keramischen Sanitärgegenstand sowie einen Sitz, einen Deckel oder eine Sitz-Deckel-Garnitur, der oder die mit einer oder zwei Gelenkanordnungen der vorstehend beschriebenen Art am Sanitärgegenstand gelagert ist. Bei dem Sanitärgegenstand kann es sich um ein WC handeln, das bodenseitig oder wandseitig angeordnet wird. In diesem Fall wird zweckmäßigerweise eine Sitz-Deckel-Garnitur verwendet, in Verbindung mit zwei erfindungsgemäßen Gelenkanordnungen mit Dämpferelementen, da sowohl die Schwenkbewegung des Sitzes als auch des Deckels in die abgesenkte Stellung bedämpft werden soll. Handelt es sich bei dem Sanitärgegenstand um ein Urinal, so ist nur ein Deckel vorgesehen, der über nur eine erfindungsgemäße Gelenkanordnung gedämpft gelagert werden kann. An der anderen Deckelseite kann ein einfacher Lagerzapfen, der zusammen mit der Dämpfereinrichtung und dem Verbindungselement die Lagerachse bildet respektive verlängert, vorgesehen sein, der mit einem Scharnierdorn am Sanitärgegenstand fixiert ist. Denkbar ist aber auch die Ausführung des Sanitärgegenstands als Bidet, wo beispielsweise nur ein Sitz angeordnet wird, der ebenfalls nur mittels einer Gelenkanordnung gedämpft schwenkgelagert wird.

Weitere Vorteile und Einzelheiten der der vorliegenden Erfindung ergeben sich aus den im Folgenden beschriebenen Ausführungsbeispielen sowie anhand der Zeichnungen. Dabei zeigen:
- Fig. 1: eine Explosionsdarstellung einer erfindungsgemäßen Gelenkanordnung in zwei unterschiedlichen Ausführungsformen,
- Fig. 2: eine vergrößerte Perspektivansicht des Dämpferelements mit zugeordneter Abdeckkappe,
- Fig. 3: eine vergrößerte Perspektivansicht des Lagerelements,
- Fig. 4: eine vergrößerte Perspektivansicht des Befestigungselements in Form eines Dorns,
- Fig. 5: eine Explosionsdarstellung, teilgeschnitten, einer ersten erfindungsgemäßen Ausgestaltung der Gelenkanordnung der ersten Ausführungsform mit Dorn,
- Fig. 6: eine Prinzipdarstellung der Montagestellung, teilgeschnitten, der Anordnung aus Fig. 5,
- Fig. 7: eine teilgeschnittene Ansicht einer zweiten nicht erfindungsgemäßen Ausgestaltung der Gelenkanordnung der ersten Ausführungsform mit Dorn, teilweise montiert,
- Fig. 8: eine vergrößerte Prinzipdarstellung eines Befestigungselements in Form einer Gewindestange,
- Fig. 9: eine teilgeschnittene Prinzipdarstellung der montierten Gelenkanordnung der zweiten Ausgestaltung mit der Gewindestange,
- Fig. 10: eine Explosionsdarstellung einer nicht erfindungsgemäßen Gelenkanordnung einer dritten erfindungsgemäßen Ausführungsform mit exzentrisch an einer Halteplatte gelagerten Dorn,
- Fig. 11: eine Aufsicht auf die Halteplatte nebst Befestigungsschraube und Dorn nach Fig. 10, und
- Fig. 12: eine Explosionsdarstellung, teilweise geschnitten, einer nicht erfindungsgemäßen Gelenkanordnung einer vierten Ausführungsform.

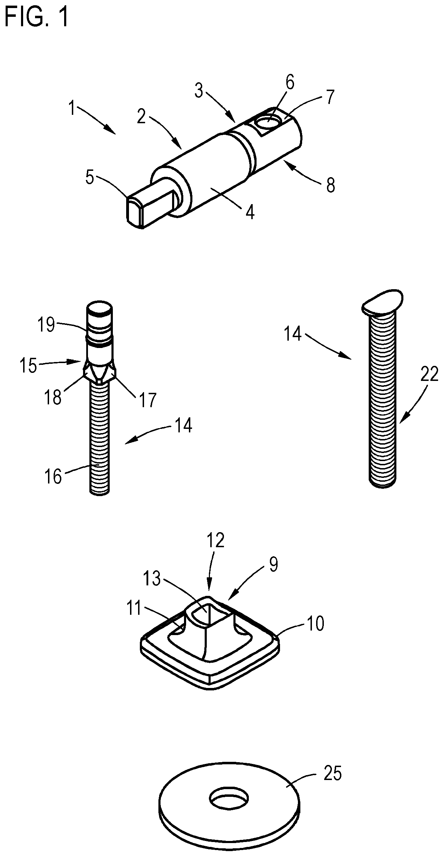

Fig. 1 zeigt eine Explosionsdarstellung einer erfindungsgemäßen Gelenkanordnung 1, umfassend ein Dämpferelement 2 mit zugeordnetem Verbindungselement 3, das hier einstückig mit dem Dämpferelement 2 ausgeführt ist. Das Dämpferelement 2 weist ein bevorzugt aus Kunststoff gefertigtes Gehäuse 4 auf, an das das Verbindungselement 3 einstückig angeformt ist.

Am Dämpferelement 2 ist in an sich bekannter Weise eine Formschlussgeometrie in Form eines abgeflachten, vorspringenden Zapfens 5 angeformt, der in das Innere des Gehäuses 4 läuft und dort mit einer Dämpfungseinrichtung, üblicherweise fluidisch gekoppelt ist respektive zusammenwirkt, so dass eine Rotation des Zapfens 5 relativ zum Gehäuse 4 gedämpft erfolgt. Der Zapfen 5 greift in eine entsprechende, formkompatible Formschlusskontur an einem Sitz oder einem Deckel, der über die Gelenkanordnung 1 an einem keramischen Sanitärgegenstand oberseitig zu befestigen ist, ein, so dass eine Schwenkbewegung des Sitzes zwangsläufig zu einer Rotation des Zapfens um die Schwenkachse, die von dem Dämpfungselement 2 in Verbindung mit dem Verbindungselement 3 gebildet wird, erfolgt. Der grundsätzliche Aufbau eines solchen Dämpferelements und die Anordnung solcher Sitz-, Deckel- oder Garniturlagerungen ist bekannt, siehe beispielsweise EP 1 199 020 A2.

Das Verbindungselement 3 weist bei der erfindungsgemäßen Gelenkanordnung eine Durchgangsbohrung 6 auf, also eine Bohrung gleichbleibenden Durchmessers. An der Oberseite des Verbindungsabschnitts ist eine Abflachung oder Eintiefung 7 ausgebildet, das heißt, dass sich eine ebene Oberseite ergibt. Die Unterseite des Verbindungselements weist eine Formschlussgeometrie 8 auf, sie ist mit einer rundlichen Außenform versehen, vorzugsweise einer Teilzylinderform.

Die Gelenkanordnung 1 umfasst des Weiteren ein Lagerelement 9, das einen breiten Fuß 10 aufweist, an den sich ein schmälerer Abschnitt anschließt, der an seiner Oberseite einen Halteabschnitt 11 in Form einer zweiten Formschlussgeometrie 12 aufweist, die ebenfalls rundlich ausgeführt ist und formkompatibel zur ersten Formschlussgeometrie 8 der Unterseite des Verbindungselement 3 ist. In der Montagestellung, worauf nachfolgend noch eingegangen wird, liegt das Verbindungselement 3 mit seiner Formschlussgeometrie 8 formschlüssig in der zweiten Formschlussgeometrie 12 des Lagerelements 9, so dass beide in Bezug auf eine Drehung um die durch die Durchgangsbohrung 6 laufende Achse drehfest gekoppelt sind.

Das Lagerelement 9, das im gezeigten Beispiel einen rechteckigen Fuß 10 aufweist, der gleichermaßen aber auch rund oder eine andere Geometrie aufweisen kann, weist ebenfalls eine Durchgangsbohrung 13 auf, die in der Montagestellung mit der Durchgangsbohrung 6 kommuniziert.

Beide Durchgangsbohrungen 6, 13 dienen der gemeinsamen Aufnahme eines Befestigungselements 14, wobei zwei Ausgestaltungen von Befestigungselementen in Fig. 1 gezeigt sind. Die erste Erfindungsalternative sieht ein Befestigungselement 14 in Form eines Dorns 15 vor, der einen Gewindeabschnitt 16 aufweist, der der Aufnahme einer Befestigungsmutter oder Ähnlichem dient, um den Dorn 15 an dem Sanitärgegenstand zu verschrauben. An den Gewindeabschnitt 16 schließt sich ein radial nach außen vorspringender Kragen 17 an, der seitlich abgeflacht ist und damit eine Haltegeometrie 18 aufweist, an der mit einem Werkzeug wie einem Maulschlüssel oder dergleichen angegriffen werden kann, um den Dorn 15 an der Keramik festzuschrauben.

An den Kragen 17 schließt sich der eigentliche Dornabschnitt 19 an, der in der Montagestellung in die Durchbrechung 6 eingreift. An dem Dornabschnitt 19 ist in einer Nut ein Klemmring 20 aufgenommen, der in der Montagestellung eine radiale Verklemmung zur Innenwandung der Durchgangsbohrung 6 erwirkt. Es handelt sich bei dem Klemmring 20 zweckmäßigerweise um einen Metallring.

Axial beabstandet zu ihm ist ein Dämpfungsring 21, beispielsweise ein einfacher Gummiring, angeordnet, der die Aufschiebebewegung bedämpft, wenn also das Verbindungselement 3 respektive die Dämpfungsalternative 2 auf den Dorn 15 aufgeschoben wird.

Fig. 1 zeigt des Weiteren wie beschrieben ein alternatives zweites Befestigungselement 14 in Form einer Gewindestange 22, die eine weitere Befestigungsvariante ermöglicht, worauf jedoch nachfolgend noch im Detail eingegangen wird.

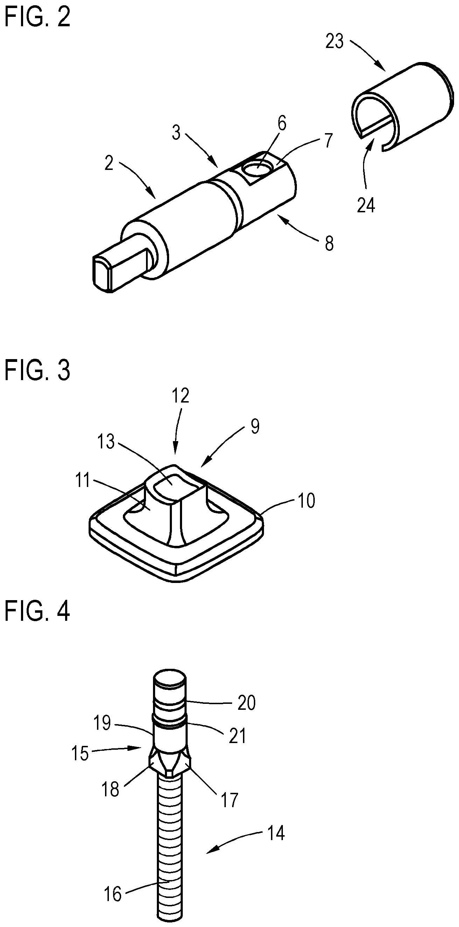

Nähere Details zu den Bauteilen der ersten Erfindungsvariante, nämlich dem Dämpfungselement 2 nebst Verbindungselement 3, dem Lagerelement 9 sowie dem Befestigungselement 14 in Form des Dorns 15 sind den Fig. 2 - 4 zu entnehmen.

Fig. 2 zeigt in einer vergrößerten Perspektivansicht das Dämpferelement 2 mit dem angeformten Verbindungselement 3. Gut zusehen ist die Abflachung oder Eintiefung 7, im Bereich welcher die Durchgangsbohrung 6 ausgebildet ist.

Gezeigt ist des Weiteren eine Abdeckkappe 23, die in der Montagestellung auf dem Verbindungsabschnitt 3 aufgesteckt wird. Sie weist eine Ausnehmung 24 auf, um das Lagerelement 9 zu umgreifen, das in der Montagestellung ja unterhalb des Verbindungsabschnitts 3 angeordnet ist. Wie das Dämpferelement 2 und der Verbindungsabschnitt 3 ist auch die Abdeckkappe 23 bevorzugt aus Kunststoff gefertigt.

Das Dämpferelement 2 nebst Verbindungselement 3 sowie die Abdeckkappe 23 sind für alle nachfolgend beschriebenen Ausgestaltungsvarianten gleich.

Fig. 3 zeigt in vergrößerter Detailansicht das Lagerelement 9 mit dem breiten, flachen Fuß 10, an dem sich quasi mittig der schmälere Abschnitt mit dem endseitigen Halteabschnitt 11 erhebt. Ersichtlich ist der Halteabschnitt 11 als rundliche vertiefte zweite Formschlussgeometrie 12 ausgeführt, die die rundliche erste Formschlussgeometrie 8, also die Unterseite des Verbindungsabschnitts 3 formschlüssig aufnimmt. Auch bei dem Lagerelement 2 handelt es sich bevorzugt um ein Kunststoffelement, es kann aber auch aus Metall ausgeführt sein.

Fig. 4 zeigt in vergrößerter Darstellung den Dorn 15, bei dem es sich zweckmäßigerweise um ein Metallbauteil handelt, nachdem er einerseits eine feste Verbindung zum Sanitärgegenstand eingehen muss, andererseits aber auch im Falle der Verschwenkung die entsprechenden Momente aufnehmen muss. In Fig. 4 sind die vorstehend bereits beschriebenen Details anschaulich dargestellt.

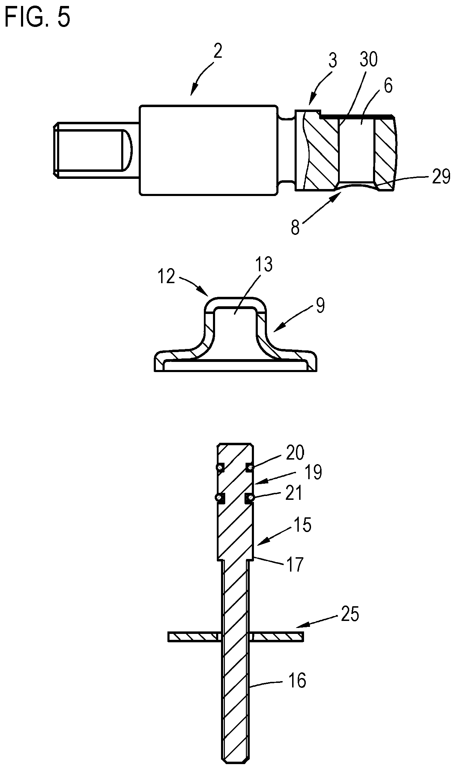

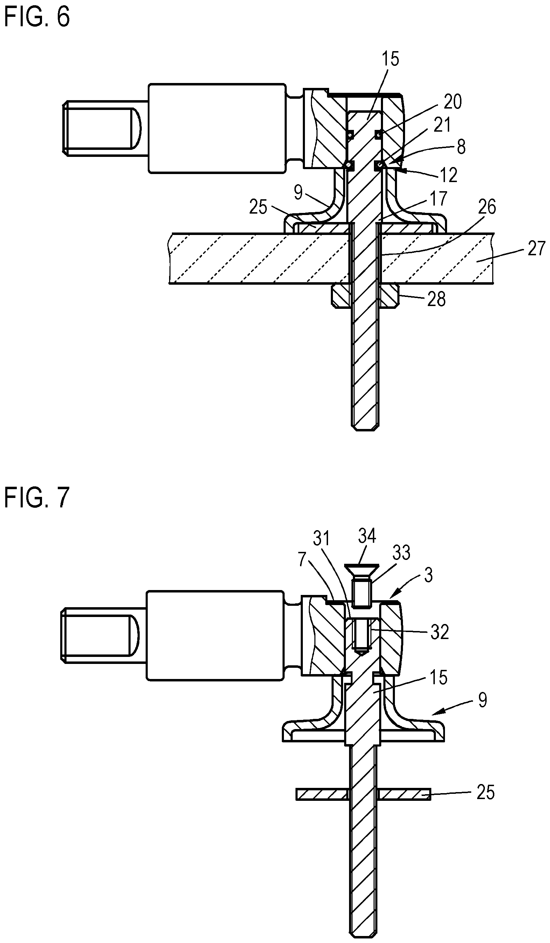

Fig. 5 zeigt in Form einer Explosionsdarstellung, teilweise geschnitten, die beschriebenen Elemente vor der Montage. Gezeigt ist das Dämpferelement 2 mit dem angeformten, geschnittenen Verbindungselement 3, das geschnittene Lagerelement 9 sowie den geschnitten dargestellten Dorn 15 und eine diesem zugeordnete Lagerscheibe 25, vorzugsweise ebenfalls aus Metall. Zur Montage wird zunächst die Lagerscheibe 25 auf den Gewindeabschnitt 16 des Dorns 15 aufgeschoben, wonach dieser durch eine entsprechende Bohrung 26 im keramischen Sanitärgegenstand 27, der in Fig. 6, die die Montagestellung zeigt, nur dem Prinzip nach dargestellt ist, geschoben wird. Von der Unterseite wird im gezeigten Beispiel eine Mutter 28 auf den Gewindeabschnitt 16 geschraubt, worüber der Dorn 15 fest fixiert ist, nachdem er an der gegenüberliegenden Seite mit dem Kragen 17 auf der Lagerscheibe 25 aufliegt und gegengelagert ist. Die Lagerscheibe 25 ist bevorzugt aus Metall und leicht bombiert, so dass sie beim Anziehen der Schraubenverbindung leicht deformiert wird, wodurch eine die Verschraubung fixierende, axiale Konterspannung erzeugt wird.

Sodann wird das Lagerelement 9 aufgeschoben, dessen Fuß so bemessen ist, dass er über die Lagerscheibe 25 greift. Das Lagerelement 9 dient wie beschrieben der Aufnahme des Dämpferelements 2 respektive des Verbindungselements 3, das als nächstes auf den Dorn 15 respektive den noch axial aus der Durchgangsbohrung 13 des Lagerelements 9 hervorstehenden Dornabschnitt 19 mit der Durchgangsbohrung 6 aufgeschoben wird. Wie Fig. 5 in der Schnittansicht zeigt, ist an der Unterseite des Verbindungselements 3, also im Bereich der ersten Formschlusskontur 8, am Eingang zur Durchgangsbohrung 6 eine Fase 29 ausgebildet. Beim Aufschieben auf den Dornabschnitt 19 läuft diese Fase 29 gegen den radial etwas vorspringenden Klemmring 20. Dies führt dazu, dass aufgrund der konischen Fasenform der Klemmring 20 zusammengedrückt wird. Beim weiteren Aufschieben liegt er mit Druck an der Innenwandung 30 der Durchgangsbohrung 6 an, so dass hierüber eine Klemmfixierung möglich ist.

Mit Erreichen der Endstellung läuft die Fase 29 gegen den Dämpfungsring 21, so dass ein gedämpftes Anlegen der beiden Formschlussgeometrien 8 und 12 aneinander erfolgt.

Fig. 6 zeigt die Montagestellung, aus der ersichtlich ist, dass der Dorn 15 vollkommen eingehaust ist und das Äußere der Gelenkanordnung im Bereich unterhalb der Dämpfungseinrichtung 2 von dem Lagerelement 9 gebildet wird.

In dieser Position ist das Dämpferelement 2 um die Achse des Dorns 15 verschwenkbar, lediglich die Klemmung des Klemmrings 20 setzt der Verschwenkung einen geringen Widerstand entgegen. Dies ermöglicht eine einfache Ausrichtung des Verbindungselements 2 relativ zum Sitz bzw. Deckel. Mit dem Verbindungselement 2 verschwenkt aber auch das Lagerelement 9 um die Dornachse, resultierend aus der formschlüssigen Verbindung der Formschlussgeometrien 8 und 12.

Bei der Erfindung erfolgt die Fixierung des Verbindungselements 3 auf dem Dorn 15 über eine Klemmung mittels des Klemmrings 20. Diese Anordnung kann ohne Weiteres wieder gelöst werden, das heißt, dass die Dämpfungseinrichtung 2 auf einfache Weise wieder vom Dorn 15 abgezogen werden kann. Es ist lediglich der Widerstand der Klemmung über den Klemmring 20 zu überwinden.

Um eine festere Fixierung zu realisieren, ist eine Ausgestaltung wie in Fig. 7 gezeigt denkbar. Fig. 7 zeigt wiederum eine teilgeschnittene, teilmontierte Gelenkanordnung 1, die insoweit identisch zur vorstehend beschriebenen Ausgestaltung ist, also neben dem Dämpferelement 2 nebst Verbindungselement 3 ebenfalls ein Lagerelement 9 der vorbeschriebenen Art sowie einen Dorn 15 aufweist. Anders als bei der vorstehenden Ausführungsform ist in der Stirnfläche 31 des Dorns 15 eine Innengewindebohrung 32 ausgebildet, in die eine Befestigungsschraube 33 eingeschraubt wird, deren Schraubenkopf 34 in der Montagestellung auf der Abflachung oder Eintiefung 7 aufliegt. Hierüber wird das Verbindungselement 3 fest gegen das auf dem Sanitärgegenstand aufgelagerte Lagerelement 9 gespannt. Die Länge der Befestigungsschraube 33 ist so bemessen, dass nach wie vor die Abdeckkappe 23 übergeschoben werden kann.

Bei dieser Ausgestaltung ist also ein Lösen der Verbindung nur mittels eines Werkzeugs möglich.

Grundsätzlich wäre es denkbar, an dem in Fig. 4 gezeigten Dorn 15 auch eine oberseitige Innengewindebohrung 32 auszubilden, wie auch den Klemmring 20 respektive zumindest eine Nut und den Dämpferring 21 respektive zumindest eine Nut am Dorn 15 vorzusehen. Dies ermöglicht es, mit ein und demselben Dorn 15 dann vor Ort zu entscheiden, ob nun die in den Fig. 5 und 6 gezeigte Befestigungsvariante oder die in Fig. 7 gezeigte Befestigungsvariante realisiert wird.

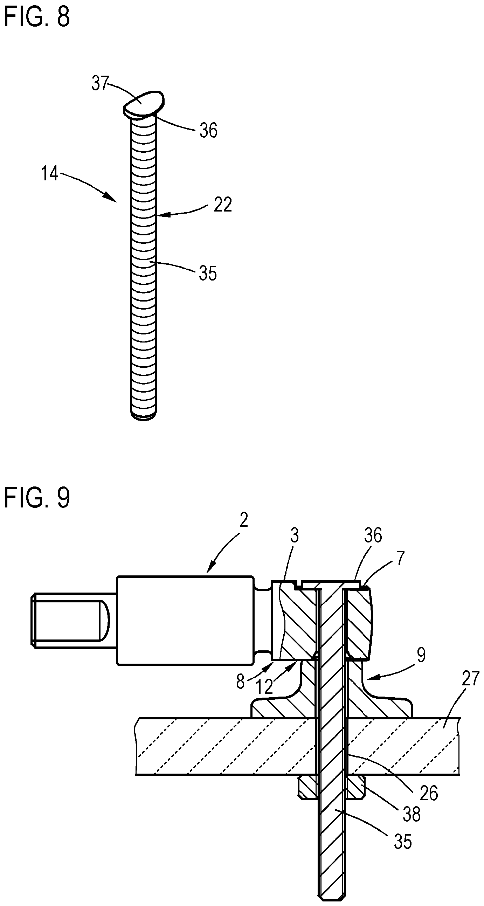

Fig. 8 zeigt in Form einer vergrößerten Perspektivansicht die zweite Ausführungsform des Verbindungselements 14 in Form der Gewindestange 22. Diese weist einen länglichen Gewindeabschnitt 35 auf, der in einem Kopf 36 endet, der im gezeigten Beispiel eine rundliche Oberseite 37 aufweist. Bei dieser Ausgestaltung ist die Montagefolge anders als bei der vorstehend beschriebenen Variante.

Hier wird zunächst das Verbindungselement 3, siehe Fig. 9, auf den Gewindeabschnitt 35 aufgeschoben, bis der Schraubenkopf 36 auf der Abflachung oder Eintiefung 7 flächig aufliegt. Anschließend wird das Lagerelement 9 aufgeschoben, das im gezeigten Beispiel aus Vollmaterial ist, also nicht etwas hülsenförmig ausgeführt ist wie in den vorstehenden Figuren dargestellt. Bei Bedarf kann auch hier eine vorzugsweise metallene und gegebenenfalls leicht bombierte Lagerscheibe aufgeschoben werden, über die dann in der Montagestellung das Lagerelement 9 auf der Keramik abgestützt wäre. Kommt keine Lagerscheibe zum Einsatz, ist das Lagerelement 9 direkt auf der Keramik abgestützt, wie in Fig. 9 gezeigt. Diese vorgefertigte Anordnung wird sodann auf den Sanitärgegenstand 27 aufgesetzt, derart, dass der Gewindeabschnitt 35 die Bohrung 26 durchgreift. Sodann wird eine Mutter 38 auf den Gewindeabschnitt 35 von unterhalb der Befestigungsfläche am Sanitärgegenstand 27 geschraubt, worüber die Anordnung axial fest verspannt wird. Vor diesem Verspannen ist auch hier die gemeinsame Verschwenkmöglichkeit von Dämpferelement 2 und Lagerelement 9 gegeben, da auch hier die erste Formschlussgeometrie 8 des Verbindungselements 3 in die zweite Formschlussgeometrie 12 des Lagerelements 9 formschlüssig eingreift.

Wenngleich Fig. 9 hier ein als stabileres Vollmaterialteil ausgeführtes Lagerelement 9 aufweist, könnte gleichermaßen ein Lagerelement wie bezüglich der ersten Ausgestaltung beschrieben und in Fig. 5 im Schnitt gezeigt verwendet werden. Das heißt, dass dann sowohl was das Dämpferelement 2 und das Verbindungselement 3 als auch das Lagerelement 9 angeht, identische Bauteile verwendbar, was natürlich insofern zu bevorzugen ist, als möglichst wenig unterschiedliche Bauteile zur Bildung eines Gesamtsystems zu verwenden sind.

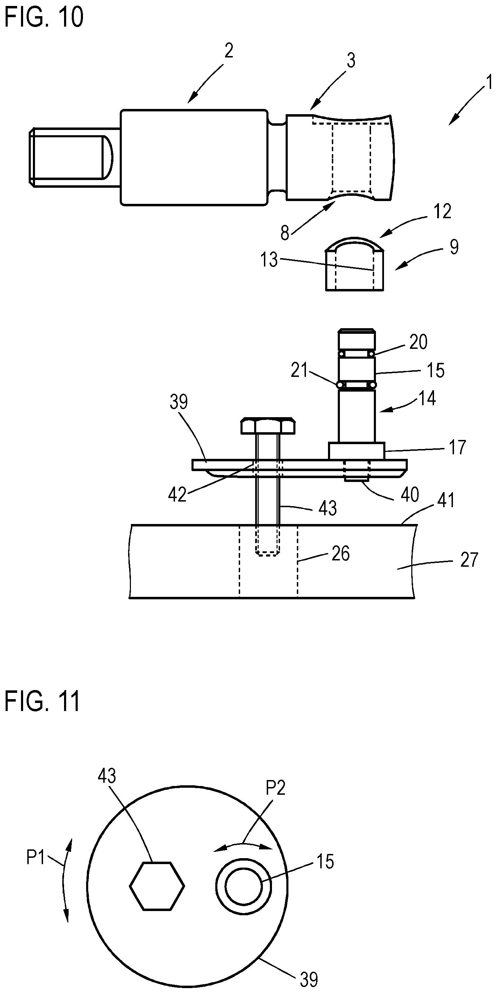

Fig. 10 zeigt eine Explosionsansicht einer weiteren Ausführungsform einer nicht erfindungsgemäßen Gelenkanordnung 1. Auch hier kommt ein identisch ausgeführtes Dämpferelement 2 mit identisch ausgeführtem Verbindungselement 3 zum Einsatz. Des Weiteren ist auch hier ein Lagerelement 9 vorgesehen, das hier jedoch hülsenförmig ausgeführt ist, also keinen Fuß aufweist. Es weist aber ebenfalls eine Durchgangsbohrung 13 sowie einen Halteabschnitt 11 in Form einer zweiten Formschlussgeometrie 12 auf, die mit der ersten Formschlussgeometrie 8 des Verbindungselements 3 in gleicher Weise wie vorstehend beschrieben formschlüssig zusammenwirkt.

Vorgesehen ist des Weiteren auch hier ein Befestigungselement 14 in Form eines Dorns 15, dessen Ausgestaltung im Wesentlichen dem in Fig. 4 gezeigten Dorn 15 entspricht, es ist lediglich kein Gewindeabschnitt 16 vorgesehen, vielmehr endet der Dorn 15 mit dem Kragen 17. An der Unterseite des Kragens 17 ist eine Innengewindebohrung vorgesehen, in die im gezeigten Beispiel zur Befestigung des Dorns 15 an einer Haltescheibe 39 eine Befestigungsschraube 40 eingeschraubt wird.

In der Montagestellung liegt die Haltescheibe 39 an der Oberseite 41 des Sanitärgegenstands 27 an. Um sie zu fixieren, ist in einer Durchgangsbohrung 42 eine Befestigungsschraube 43 eingesetzt, die die Bohrung 26 des Sanitärgegenstands 27 durchgreift und unterseitig mit einer nicht näher gezeigten Mutter gekontert wird.

Eine Aufsicht auf die Haltescheibe 39 zeigt Fig. 11. Gezeigt ist einerseits die Befestigungsschraube 43, andererseits der Dorn 15. Diese Ausgestaltung ermöglicht eine doppelte Verdrehbarkeit und damit eine Ausrichtbarkeit des Dämpferelements 2 im erweiterten Umfang. Zum einen kann die Haltescheibe 39 als solche um die Achse der Befestigungsschraube 43 verdreht werden, wie durch den Pfeil P1 dargestellt ist. Der exzentrische Dorn 15 kann daher um diese Achse verschwenkt werden.

Darüber hinaus besteht, wie durch den Doppelpfeil P2 gezeigt, wie bei allen Ausgestaltungen die Verschwenkbarkeit des Verbindungselements 2 samt Lagerelement 9 um die Achse des Dorns 15. Hierüber besteht also die Möglichkeit, sich auch größeren Toleranzen problemlos anpassen zu können.

Im Rahmen der Montage wird zunächst der Dorn 15 an der Halteplatte 39 befestigt, wonach die Befestigungsschraube 43 gesetzt und durch die Bohrung 26 geschoben wird und leicht über eine Mutter gekontert wird. Sodann wird das Lagerelement 9 aufgeschoben, gefolgt vom Verbindungselement 3. Dieses wird hier wiederum über den Klemmring 20 klemmfixiert, während der Dämpfungsring 21 einen gedämpften Anschlag der Formschlussgeometrien 8 und 12 aneinander ermöglicht. Ein einfaches Abziehen ist hier ohne Weiteres möglich. Nach Ausrichten der Anordnung wird die Befestigungsschraube 43 festgezogen, so dass die Position der Haltescheibe 39 fixiert wird.

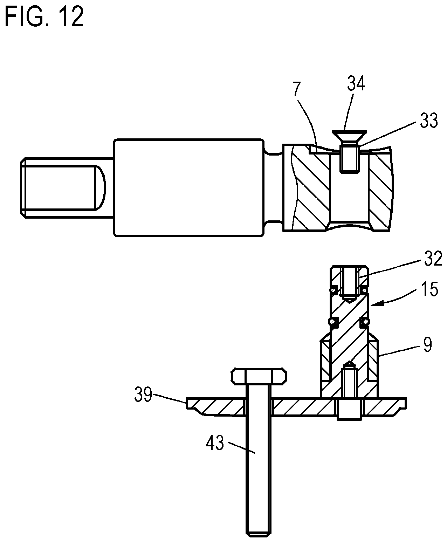

Anders hingegen die Ausgestaltung gemäß Fig. 12, die nahezu identisch der Ausgestaltung gemäß Fig. 10 entspricht. Lediglich der Dorn 15 ist hier etwas anders ausgeführt, nachdem er ein Innengewinde 32 aufweist, wie bei der Ausgestaltung gemäß Fig. 7. In dieses Innengewinde 32 wird wiederum die Befestigungsschraube 33 geschraubt, deren Schraubenkopf 34 auf der Abflachung oder Eintiefung 7 aufliegt bzw. versenkt aufgenommen ist. Hier ist also zum Lösen der Verbindung wiederum ein Werkzeug zum Aufschrauben der Schraube 33 erforderlich.

Allen Ausführungen gemeinsam ist, dass ein identisch ausgeführtes Dämpferelement 2 nebst Verbindungselement 3 verwendet werden kann, dass eine Durchgangsbohrung aufweist. Diese Durchgangsbohrung ermöglicht die Ausbildung der unterschiedlichen Befestigungsvarianten, so dass sich insgesamt ein bariables Gelenksystem ergibt.

Während die Ausgestaltungen, bei denen die Fixierung des Verbindungselements 3 am Dorn 15 über den Klemmring 20 erfolgt, sehr einfach zu lösen sind, sind die Ausgestaltungen, bei denen das Verbindungselement 3 über die Befestigungsschraube 33 am Dorn 15 verschraubt wird, nur mit einem Werkzeug zu lösen. Demgegenüber ist die Ausgestaltung mit der Gewindestange 22 noch schwieriger zu lösen, da deren rundlicher Kopf 36 nicht mit einem Werkzeug greifbar ist und von daher die Befestigung der Gelenkanordnung an dem Sanitärgegenstand 27 nur durch Lösen der Mutter 38 von unterhalb der Keramik möglich ist.

## Patentansprüche

1. Gelenkanordnung zur schwenkbaren Lagerung eines Deckels, eines Sitzes oder einer Sitz-Deckel-Garnitur um eine Schwenkachse an einem keramischen Sanitärgegenstand, umfassend ein an dem Sanitärgegenstand (27) anzuordnendes längliches Befestigungselement (14), ein eine von dem Befestigungselement (14) zu durchgreifende Durchgangsbohrung (13) aufweisendes Lagerelement (9), und ein die Schwenkbewegung dämpfendes Dämpferelement (2) mit einem Verbindungselement (3), das ebenfalls eine Durchgangsbohrung (6), in die das Befestigungselement (14) ein- oder durch die es durchgreift, aufweist und das in der Montagestellung auf dem Lagerelement (9) aufsitzt, wobei das Lagerelement (9) einen das Verbindungselement (3) formschlüssig aufnehmenden Halteabschnitt (11) aufweist, wobei das Befestigungselement (14) ein Dorn (15) ist, der in dem Bereich, der in der Montagestellung in die am Verbindungselement (3) vorgesehene Durchgangsbohrung (6) eingreift, wenigstens einen Klemmring (20) zur Klemmung des Verbindungselements (3) aufweist, wobei die Durchgangsbohrung (6) des Verbindungselements (3) zur Aufnahme sowohl des als Dorn ausgebildeten Befestigungselements (14) in klemmender Befestigung als auch eines als Gewindestange ausgebildeten Befestigungselements (14) ausgebildet ist.

2. Gelenkanordnung nach Anspruch 1, **dadurch gekennzeichnet, dass** das Verbindungselement (3) zumindest im am Lagerelement (9) anliegenden Abschnitt (8) eine rundliche Außenform aufweist und der Halteabschnitt (11) formkompatibel rundlich ausgeführt ist.

3. Gelenkanordnung nach Anspruch 2, **dadurch gekennzeichnet, dass** der Abschnitt (8) und der Halteabschnitt (11) eine Teilzylinderform aufweisen.

4. Gelenkanordnung nach einem der vorangehenden Ansprüche, **dadurch gekennzeichnet, dass** das Lagerelement (9) nach Art einer Kappe mit einem breiten Fuß (10) und einem sich daran anschließenden, den Halteabschnitt (11) aufweisenden schmäleren Abschnitt ausgeführt ist, oder dass das Lagerelement (9) hülsenartig ausgeführt ist und an einem Ende den Halteabschnitt (11) aufweist.

5. Gelenkanordnung nach einem der vorangehenden Ansprüche, **dadurch gekennzeichnet, dass** der Dorn (15) zumindest abschnittsweise mit einem Gewinde (16) zur Aufnahme eines ihn an dem Sanitärgegenstand (27) fixierenden Widerlagerelements, insbesondere einer Mutter (28) versehen ist.

6. Gelenkanordnung nach Anspruch 5, **dadurch gekennzeichnet, dass** der Dorn (15) einen Kragen (17) aufweist, über den der das Gewinde aufweisende Dorn (15) in der Montagestellung an einer auf dem Sanitärgegenstand (27) aufliegenden Lagerscheibe (25) aufgelagert ist.

7. Gelenkanordnung nach Anspruch 6, **dadurch gekennzeichnet, dass** der Kragen (17) eine Haltegeometrie (18) zum Angreifen mit einem Werkzeug aufweist.

8. Gelenkanordnung nach einem der vorangehenden Ansprüche, **dadurch gekennzeichnet, dass** am Verbindungselement (3) an der beim Aufschieben auf den Dorn (15) vorlaufenden Seite im Bereich der Durchgangsbohrung (6) eine Fase (29) vorgesehen ist, die auf den Klemmring (20), diesen zusammendrückend, läuft.

9. Gelenkanordnung nach einem der vorangehenden Ansprüche, **dadurch gekennzeichnet, dass** am Dorn (15) wenigstens einen die Aufschiebebewegung dämpfender Dämpfungsring (21) angeordnet ist.

10. Gelenkanordnung nach einem der vorangehenden Ansprüche, **dadurch gekennzeichnet, dass** am Verbindungselement (3) eine Eintiefung (7) oder Ausnehmung zur Aufnahme eines Kopfes (36) der Gewindestange (14) ausgebildet ist.

11. Gelenkanordnung nach Anspruch 10, **dadurch gekennzeichnet, dass** der Kopf (36) eine rundliche Oberseite (37) aufweist.

12. Gelenkanordnung nach einem der vorangehenden Ansprüche, **gekennzeichnet durch** eine auf das Verbindungselement (3) aufzuschiebende Abdeckkappe (23).

13. Gelenkanordnung nach einem der vorangehenden Ansprüche, **dadurch gekennzeichnet, dass** das Verbindungselement (3), das Lagerelement (9) und gegebenenfalls die Lagerscheibe (25) und die Abdeckkappe (23) aus Kunststoff sind.

14. Sanitäreinrichtung, umfassend einen keramischen Sanitärgegenstand sowie einen Sitz, einen Deckel oder eine Sitz-Deckel-Garnitur, der oder die mit einer oder zwei Gelenkanordnungen (1) nach einem der vorangehenden Ansprüche am Sanitärgegenstand (27) gelagert ist.

## Claims

1. Joint arrangement for pivotable mounting of a lid, a seat or a seat/lid fitting about a pivot axis on a ceramic sanitary article, comprising an elongate fastening element (14) which is to be arranged on the sanitary article (27), a bearing element (9) having a passage bore (13) which is to be passed through by the fastening element (14), and a damper element (2), damping the pivoting movement, with a connecting element (3) which likewise has a passage bore (6), into which the fastening element (14) engages or through which it passes, and which, in the mounting position, is seated on the bearing element (9), wherein the bearing element (9) has a holding portion (11) which receives the connecting element (3) in a form-fitting manner, wherein the fastening element (14) is a pin (15) which, in the region which, in the mounting position, engages into the passage bore (6) provided on the connecting element (3), has at least one clamping ring (20) for clamping the connecting element (3), wherein the passage bore (6) of the connecting element (3) is configured for receiving both the fastening element (14) in the form of a pin, with clamping fastening, and a fastening element (14) in the form of a threaded rod.

2. Joint arrangement according to Claim 1, **characterized in that** the connecting element (3) has a rounded outer shape at least in the portion (8) abutting against the bearing element (9), and the holding portion (11) is formed so as to be rounded in a manner compatible in terms of shape.

3. Joint arrangement according to Claim 2, **characterized in that** the portion (8) and the holding portion (11) have the shape of a partial cylinder.

4. Joint arrangement according to one of the preceding claims, **characterized in that** the bearing element (9) is designed in the manner of a cap with a wide base (10) and with an adjoining narrower portion which has the holding portion (11), or **in that** the bearing element (9) is of sleeve-like form and has the holding portion (11) at one end.

5. Joint arrangement according to one of the preceding claims, **characterized in that** the pin (15) is provided at least sectionally with a thread (16) for receiving a counter-bearing element, in particular a nut (28), which fixes said pin to the sanitary article (27).

6. Joint arrangement according to Claim 5, **characterized in that** the pin (15) has a collar (17) via which, in the mounting position, the pin (15) having the thread is supported on a bearing washer (25) which abuts on the sanitary object (27).

7. Joint arrangement according to Claim 6, **characterized in that** the collar (17) has a holding geometry (18) for engagement by a tool.

8. Joint arrangement according to one of the preceding claims, **characterized in that**, on the connecting element (3), provision is made of a bevel (29) in the region of the passage bore (6) on the side which is the leading side when said connecting element is pushed onto the pin (15), which bevel runs onto the clamping ring (20) so as to compress the latter.

9. Joint arrangement according to one of the preceding claims, **characterized in that** at least one damping ring (21) which damps the pushing-on movement is arranged on the pin (15).

10. Joint arrangement according to one of the preceding claims, **characterized in that** a depression (7) or recess for receiving a head (36) of the threaded rod (14) is formed on the connecting element (3).

11. Joint arrangement according to Claim 10, **characterized in that** the head (36) has a rounded top side (37).

12. Joint arrangement according to one of the preceding claims, **characterized by** a covering cap (23) to be pushed onto the connecting element (3).

13. Joint arrangement according to one of the preceding claims, **characterized in that** the connecting element (3), the bearing element (9) and possibly the bearing washer (25) and the covering cap (23) are composed of plastic.

14. Sanitary device comprising a ceramic sanitary article and a seat, a lid or a seat/lid fitting that is mounted on the sanitary article (27) by way of one or two joint arrangements (1) according to one of the preceding claims.

## Revendications

1. Agencement d'articulation pour le montage pivotant d'un couvercle, d'un siège ou d'une garniture de siège et de couvercle autour d'un axe de pivotement sur un objet sanitaire en céramique, comprenant un élément de fixation (14) allongé à agencer sur l'objet sanitaire (27), un élément de palier (9) présentant un alésage de passage (13) à traverser par l'élément de fixation (14), et un élément amortisseur (2) amortissant le mouvement de pivotement, avec un élément de liaison (3) qui présente également un alésage de passage (6) dans lequel l'élément de fixation (14) pénètre ou à travers lequel il passe, et qui repose sur l'élément de palier (9) dans la position de montage, l'élément de palier (9) présentant une section de retenue (11) recevant l'élément de liaison (3) par complémentarité de forme, l'élément de fixation (14) étant un mandrin (15) qui présente, dans la zone qui, dans la position de montage, pénètre dans l'alésage de passage (6) prévu sur l'élément de liaison (3), au moins une bague de serrage (20) pour le serrage de l'élément de liaison (3), l'alésage de passage (6) de l'élément de liaison (3) étant réalisé pour recevoir aussi bien l'élément de fixation (14) réalisé sous forme de mandrin en fixation par serrage qu'un élément de fixation (14) réalisé sous forme de tige filetée.

2. Agencement d'articulation selon la revendication 1, **caractérisé en ce que** l'élément de liaison (3) présente une forme extérieure arrondie au moins dans la section (8) adjacente à l'élément de palier (9) et la section de retenue (11) est conçue sous forme arrondie compatible avec la forme.

3. Agencement d'articulation selon la revendication 2, **caractérisé en ce que** la section (8) et la section de retenue (11) présentent une forme partiellement cylindrique.

4. Agencement d'articulation selon l'une quelconque des revendications précédentes, **caractérisé en ce que** l'élément de palier (9) est conçu à la manière d'un capuchon avec un pied large (10) et une section plus étroite qui s'y raccorde, présentant la section de retenue (11), ou **en ce que** l'élément de palier (9) est conçu à la manière d'une douille et présente la section de retenue (11) à une extrémité.

5. Agencement d'articulation selon l'une quelconque des revendications précédentes, **caractérisé en ce que** le mandrin (15) est pourvu, au moins par sections, d'un filetage (16) destiné à recevoir un élément de contre-appui, notamment un écrou (28), qui le fixe à l'objet sanitaire (27).

6. Agencement d'articulation selon la revendication 5, **caractérisé en ce que** le mandrin (15) présente une collerette (17) par l'intermédiaire de laquelle le mandrin (15) présentant le filetage est monté dans la position de montage sur un disque de palier (25) reposant sur l'objet sanitaire (27).

7. Agencement d'articulation selon la revendication 6, **caractérisé en ce que** la collerette (17) présente une géométrie de retenue (18) destinée à être saisie par un outil.

8. Agencement d'articulation selon l'une quelconque des revendications précédentes, **caractérisé en ce qu'**un chanfrein (29) est prévu sur l'élément de liaison (3) sur le côté avant lors de l'enfilage sur le mandrin (15), dans la zone de l'alésage de passage (6), lequel se déplace sur la bague de serrage (20) en comprimant celle-ci.

9. Agencement d'articulation selon l'une quelconque des revendications précédentes, **caractérisé en ce qu'**au moins une bague d'amortissement (21) amortissant le mouvement d'enfilage est agencée sur le mandrin (15).

10. Agencement d'articulation selon l'une quelconque des revendications précédentes, **caractérisé en ce qu'**un creux (7) ou un évidement est réalisé sur l'élément de liaison (3) pour recevoir une tête (36) de la tige filetée (14) .

11. Agencement d'articulation selon la revendication 10, **caractérisé en ce que** la tête (36) présente un côté supérieur arrondi (37).

12. Agencement d'articulation selon l'une quelconque des revendications précédentes, **caractérisé par** un capuchon de recouvrement (23) à enfiler sur l'élément de liaison (3).

13. Agencement d'articulation selon l'une quelconque des revendications précédentes, **caractérisé en ce que** l'élément de liaison (3), l'élément de palier (9) et éventuellement le disque de palier (25) et le capuchon de recouvrement (23) sont en matière plastique.

14. Dispositif sanitaire, comprenant un objet sanitaire en céramique ainsi qu'un siège, un couvercle ou une garniture de siège et de couvercle, qui est monté sur l'objet sanitaire (27) avec un ou deux agencements d'articulation (1) selon l'une quelconque des revendications précédentes.
